# EUROPEAN PATENT APPLICATION

(11) **EP 0 987 135 A1**
(43) Date of publication of application: **22.03.2000**
(21) Application number: 99202922.3
(22) Date of filing: 08.09.1999
(51) Int. Cl.: B60J 7/05, B60J 7/02

(54) **Open roof construction for a vehicle**

(30) Priority: 16.09.1998 NL 1010104
(71) Applicant: Inalfa Industries B.V., 5804 AB Venray (NL)
(72) Inventor: Boersma, Egbert, 5708 CR Helmond (NL); Manders, Peter Christiaan Leonardus Johannes, 5961 SM Horst (NL)
(74) Representative: Metman, Karel Johannes

(57) **Abstract**

An open roof construction for a vehicle having an opening (2) in its fixed roof (1) comprises a stationary frame (3) to be secured to the roof and an adjustable panel (4) which is supported by the stationary part via an adjusting mechanism (5). This panel can be adjusted between a closed position, in which it closes said roof opening, and an open position, in which it releases the roof opening on the front side. The adjusting mechanism (5) comprise a link plate (12) mounted on at least one side edge of the panel. A movable water drain (10) is connected to the link plate via a connecting element (17). The connecting element is so shaped and mounted at the location of the connection to the link plate that it extends substantially within the thickness of said link plate (12).

## Description

The invention relates to an open roof construction according to the preamble of claim 1.

Such an open roof construction is known from practice. The connecting element in the form of an elongated spring is thereby bent at one end and hooked into a link plate through a hole formed in one side thereof.

The object of the invention is to further improve the open roof construction of the kind referred to in the introduction.

In order to accomplish that objective, the open roof construction according to the invention is characterized in that the connecting element is flattened in transverse direction, at least at locations where it overlaps said link plate.

Due to the fact that the connecting element is flattened, said connecting element will project less far in lateral direction at the location of the link plate, as a result of which the connecting element will be less of an impediment to parts that mate with the link plate and said parts can be mounted closer to the link plate.

Preferably, the connecting element extends substantially within the thickness of the link plate at the location of the connection to the link plate as a result of which the connecting element will no longer be an impediment to parts moving past.

Since the connecting element is flattened, space is furthermore created at the flattened portion for a hole through which a pin of the link plate can be passed, so that a mortise and tenon joint is formed. Preferably, said pin is formed simultaneously with the link plate, so that no additional manufacturing steps or operations are required for forming or mounting the pin.

When the link plate comprises at least two plate portions extending parallel to each other, it is preferred to insert the flattened portion of the connecting portion between the two plate portions. If insufficient space is available for doing so, one of the plate portions, preferably the thinner portion, may comprise a non-coplanar portion at the location of the connection to the connecting element. Said non-coplanar portion may for example be a flattened, lip-shaped portion.

The invention will be explained in more detail hereafter with reference to the drawings, which schematically illustrate an embodiment of the invention.
Fig. 1 is a very schematic plan view of a vehicle roof fitted with the embodiment of the open roof construction according to the invention.
Figs. 2 and 3 are larger-scale, perspective views of the mechanism on one side of the panel of the open roof construction of Fig. 1, wherein the link plate is partially cut away at the location of the connection of the connecting mechanism.
Fig. 4 is an even larger-scale sectional view along line IV-IV in Fig. 3, wherein the connecting element is not shown, however.
Fig. 5 is a side view of a detail of the link plate as indicated by arrow V.

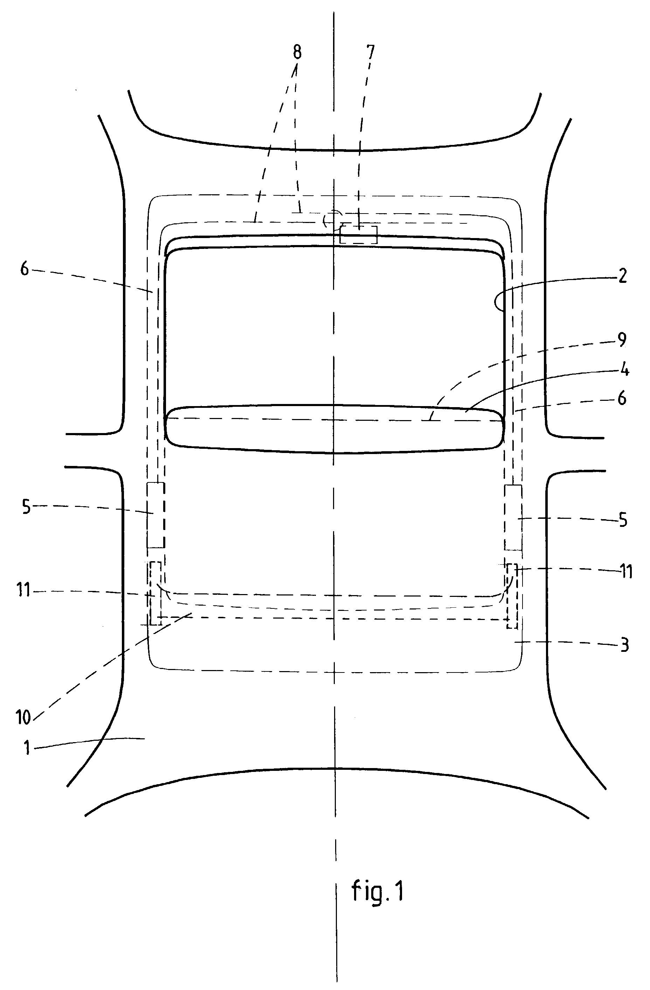

Fig. 1 shows the fixed roof 1 of a motor vehicle, in this case a passenger car. Said fixed roof is provided with a substantially rectangular roof opening 2 for mounting an open roof construction therein. Said open roof construction comprises a stationary frame 3, which is mounted against the underside of the fixed roof 1 of the vehicle in this case.

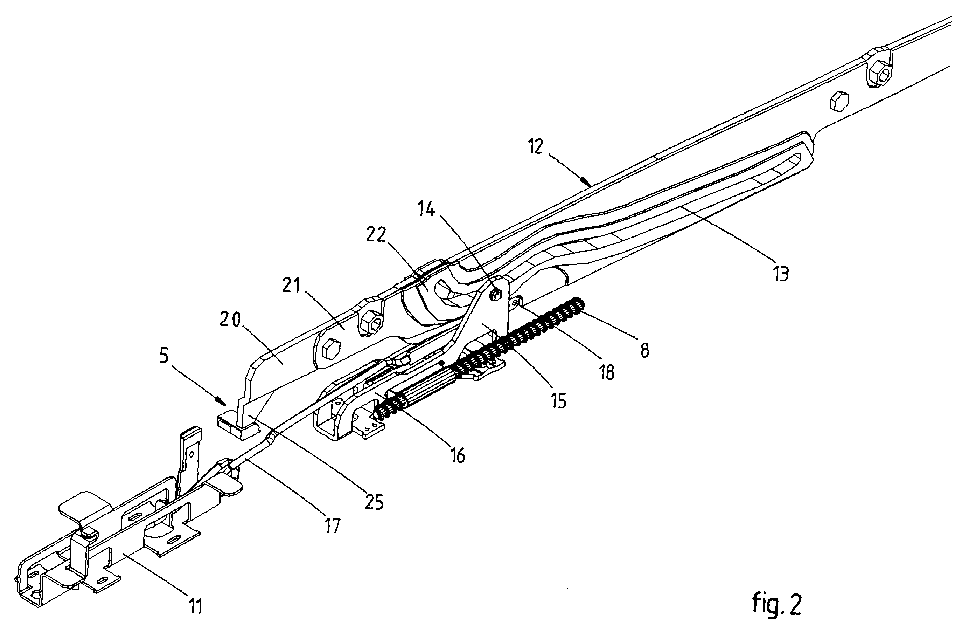

In the illustrated embodiment, the open roof construction is a so-called sliding roof or tilting-sliding roof comprising a more or less rigid, preferably transparent panel 4 as the clusure means, which is capable of selectively closing the roof opening 2 or releasing it to a greater or lesser extent. To this end, panel 4 is laterally supported by mechanisms 5, which are slidably accommodated in guide rails 6, which are mounted on frame 3 or form part thereof and which extend parallel to each other in longitudinal direction on either side of roof opening 2 and rearwards thereof. Said mechanisms 5 can be moved synchronously in said guide rails 6, moving said panel not only in longitudinal direction but also in vertical direction thereby. To this end the mechanisms 5 are operated from a driving device 7, such as an electric motor, for example via pull-push cables 8 (see Fig. 2).

In addition to panel 4, the open roof construction also comprises a second clusure means in the form of a sun screen 9, which is slidably guided in guide rails 6 with its side edges. Sun screen 9 can be manually moved forwards and rearwards or be driven by panel 4.

The open roof construction is fitted with water catching means for catching any water that may seep through between panel 4 and roof opening 2, of which means a transversely extending, movable water drain 10, among other things, is shown in the drawing. Said water drain is positioned under the rear edge of roof opening 2 in the closed position of panel 4, and it moves along with panel 4 upon movement in rearward direction thereof. Water drain 10 is to that end mounted with its ends on rear slides 11 of mechanisms 5.

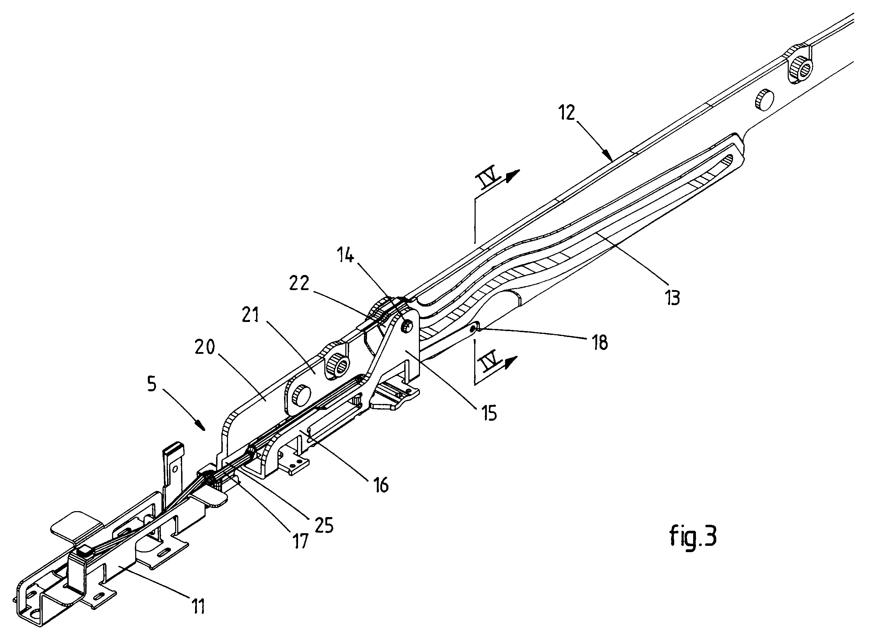

Figs. 2 and 3 show the slide 11 (without water drain and without sliding shoes) on one side of panel 4 and illustrate the connection thereof to a part of mechanism 5. The part of mechanism 5 by means of which slide 11 of water drain 10 is caused to move is a link plate 12, which is mounted to the underside of panel 4 at each side edge thereof. Link plate 12 is provided with a guide slot 13, which mates with a guide pin 14 which extends through guide slot 13 and which is secured at its ends to an associated leg 15 of a U-shaped driving slide 16. Pull-push cable 8 engages said slide 16, and the movement of panel guide pin 14 of slide 16 through guide slot 13 of the link plate 12 causes panel 4 to move in vertical direction. The water drain 10 should remain more or less stationary during said movement in vertical direction of panel 4. When guide pin 14 has reached the rear upper end of guide slot 13, panel 4 has been moved downwards from the closed position, and panel 4 can be moved to a position under fixed roof 1 by further rearward movement of slide 16, during which movement of the panel water drain 10 must be moved along by slides 11.

A connecting element 17 is provided to form a connection between the respective slide 16 and the associated link plate 12, said connecting element in this embodiment consisting of an elongated spring bent to a predetermined shape, which is capable of following the vertical movements of link plate 12 by bending, without the water drain 10 being moved to any significant degree thereby. Since connecting element 17 must have a certain length, it must be fixed to the link plate 12 at a position so far to the front that the place of attachment is located before the rear end of guide slot 13, so that slide 16, in particular legs 15 thereof, can move past connecting element 17. Since legs 15 of slide 16 closely abut link plate 12 in order to keep the construction as compact as possible, also connecting element 17 and the attachment to the link plate 12 must be narrow.

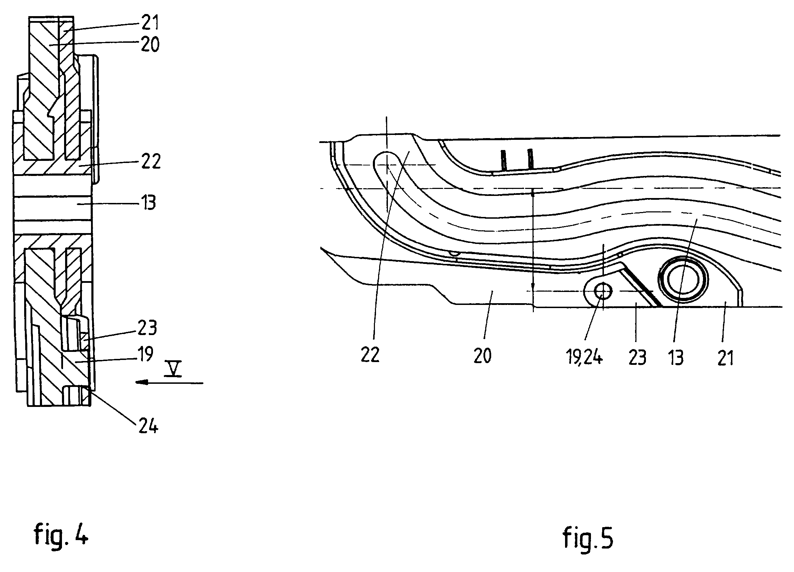

The end of connecting element 17 adjacent to link plate 12 is flattened in transverse direction for that purpose, as a result of which connecting element 17, which originally is circular, oval, barrel-shaped or the like in cross-section, is changed into a cross-section in the shape of an upright rectangle. On the one hand this leads to a reduced transverse dimension, and on the other hand it creates a possibility to form a mortise and tenon joint by forming a hole 18 in the front end of connecting element 17, through which a pin 19 (see Fig. 4) can be passed so as to form a hinged joint.

Fig. 4 is a sectional view at the location of the connection between connecting element 17 and link plate 12, wherein the connecting element is not shown for that matter. The figure shows the construction of the link plate 12, which comprises a thicker plate portion 20 and an auxiliary plate portion 21 which is locally attached thereto, as well as an injection moulded plastic portion 22 for forming the guide slot 13. As is furthermore shown in the figure, pin 19 is integral with plate portion 20, as a result of being formed on said plate portion 20 by stamping when said plate portion was being pressed or cut to the correct shape. Auxiliary plate portion 21 includes a lip 23 which is non-coplanar therewith (see also Fig. 5), which lip, after being mounted against plate portion 20, extends at some distance therefrom. Lip 23 is furthermore provided with a hole 24, into which the end of pin 19 extends, in such a manner that the connecting element 17, which has already slipped over pin 19, is retained between plate portion 20 and lip 23 of auxiliary plate portion 21. Lip 23 is additionally flattened upon being moved to a non-coplanar position, as a result of which its thickness is reduced to such an extent that the non-coplanar lip 23 nevertheless does not project beyond the width of link plate 12 (which is mainly determined by the injection moulded plastic portion 22). Also the flat end portion of the connecting element 17 remains entirely within the width or thickness of link plate 12, so that slide 16 is not impeded by connecting element 17 in any way. Fig. 3 furthermore shows that connecting element 17 largely extends under link plate 12 and therefore does not project beyond said plate at locations not reached by legs 15 of slide 16 for supporting guide pin 14 and where connecting element 17 has its original cross-section. Only at the location of a hold-down element 25 does connecting element 17 extend beside link plate 12. Connecting element 17 and hold-down element 25 are positioned slightly outwards in opposite directions so as to keep the total width centred.

From the foregoing it will be apparent that the invention provides an open roof construction which allows a very compact construction of the mechanism, in spite of the fact that the connection between the connecting element of the water drain and the link plate is located far to the front.

The invention is not restricted to the above-described embodiment as shown in the drawing, which can be varied in several ways without departing from the scope of the invention. Thus, the link plate may be of totally different construction.

## Claims

1. An open roof construction for a vehicle having an opening (2) in its fixed roof (1), comprising a stationary part (3) to be secured to the roof, an adjustable clusure means (4) which is supported by said stationary part via a mechanism (5), which element can be adjusted between a closed position, in which it closes said roof opening, and an open position, in which it releases said roof opening on the front side, wherein said mechanism (5) comprises at least one link plate (12) mounted on at least one side edge of said closure means, as well as a movable water drain (10) which is connected to said link plate via a connecting element (17), **characterized in that** said connecting element (17) is flattened in transverse direction, at least at locations where it overlaps said link plate (12).

2. An open roof construction according to any one of the preceding claims, wherein said connecting element (17) extends substantially within the thickness of said link plate (12) at the location of the connection to said link plate.

3. An open roof construction according to claim 2, wherein said connecting element (17) largely extends under said link plate (12).

4. An open roof construction according to any one of the preceding claims, wherein said link plate (12) is attached to said clusure means (4) and wherein said link plate (12) is provided with a guide slot (13) which mates with a guide pin (14) engaging therein, which guide pin is connected to a preferably U-shaped slide (16), which tightly engages round said link plate.

5. An open roof construction according to any one of the preceding claims, wherein said connecting element (17) is pivotally connected to said link plate (12) via a horizontal cross pin (19), and wherein said cross pin is preferably integral with said link plate.

6. An open roof construction according to claim 5, wherein said link plate (12) comprises at least two plate portions (20, 21) extending parallel to each other, and wherein the flattened portion of the connecting portion (17) is inserted between the two plate portions.

7. An open roof construction according to claim 6, wherein one of said plate portions (20, 21) comprises a non-coplanar portion at the location of the connection to the connecting element.

8. An open roof construction according to claim 7, wherein a lip (23) of said plate portion (21) is non-coplanar with said plate portion.

9. An open roof construction according to claim 7 or 8, wherein one (21) of said plate portions (20, 21) is not as thick as the other plate portion (20), and wherein the thinner plate portion comprises a non-coplanar portion.

10. An open roof construction according to claim 9, wherein said non-coplanar lip (23) of said plate portion (21) is additionally flattened.

11. An open roof construction according to any one of the preceding claims, wherein said connecting element (17) is made of an elongated spring which is of circular, oval, barrel-shaped or similar cross-section.

12. An open roof construction for a vehicle having an opening in its fixed roof, comprising a stationary part to be secured to the roof, an adjustable clusure means which is supported by said stationary part via adjusting mechanism, which element can be adjusted between a closed position, in which it closes said roof opening, and an open position, in which it releases said roof opening on the front side, wherein said adjusting mechanism comprise a link plate mounted on at least one side edge of said panel, as well as a movable water drain which is connected to said link plate via a connecting element, **characterized in that** said connecting element is so shaped and mounted at the location of the connection to said link plate that it extends substantially within the thickness of said link plate.
